# EUROPÄISCHE PATENTSCHRIFT

(11) **EP 0 839 734 B1**
(45) Veröffentlichungstag und Bekanntmachung des Hinweises auf die Patenterteilung: **24.11.1999**
(21) Anmeldenummer: 97114522.2
(22) Anmeldetag: 22.08.1997
(51) Int. Cl.: B65D 43/08, B65D 51/16

(54) **Mehrweggeschirr mit Deckel**
Re-usable dishes with lid
Vaisselle réutilisable avec couvercle

(30) Priorität: 20.09.1996 DE 29616400 U
(43) Veröffentlichungstag der Anmeldung: 06.05.1998
(73) Patentinhaber: Jassmann, Ewald, 70372 Stuttgart (DE)
(72) Erfinder: Jassmann, Ewald, 70372 Stuttgart (DE)
(74) Vertreter: Manitz, Finsterwald & Partner

(56) Entgegenhaltungen:
- DE-U- 29 610 407
- FR-A- 1 409 871
- GB-A- 1 582 416
- GB-A- 2 298 639
- US-A- 5 018 624

## Beschreibung

Die vorliegende Erfindung betrifft ein Mehrweggeschirr mit einem eine Befüll- und Entnahmeöffnung aufweisenden Behälterteil und einem Deckelteil, durch welches die Befüll- und Entnahmeöffnung des Behälterteils dichtend verschließbar ist, mit einer am Behälterteil vorgesehenen ersten Dichtkante und einer am Deckelteil vorgesehenen zweiten Dichtkante, die als Abdichtung für die Befüll- und Entnahmeöffnung zusammenwirken.

Derartiges Mehrweggeschirr ist in vielfacher Weise bekannt, unter anderem auch als wiederverwendbarer Haushaltsbehälter zur Aufbewahrung von Lebensmitteln, und wird zur Aufbewahrung einer Vielzahl von Lebensmitteln benutzt, die einen insbesondere luftdichten Abschluß erfordern, um in ihren Eigenschaften nicht beeinträchtigt zu werden. Solches beschirr wird insbesondere in den Druckschriften GB-A-2 298 639 und FR-A-1 409 871 beschrieben und liegt dem oberbegriff von Anspruch 1 zugrunde.

Insbesondere aus Umweltgesichtspunkten sind die dichtenden Aufnahmebehälter dabei als Mehrweggeschirr ausgebildet. Diese Behälter sollen einerseits leicht sein, um ihren Transport zu erleichtern und zu verbilligen, und andererseits ausreichend stabil und beständig, um die aufgenommene Ware sicher zu schützen und ein häufiges Wiederbefüllen zu ermöglichen.

Bei bekanntem Mehrweggeschirr dieser Art tritt das Problem auf, daß die Dichtkante mit der Zeit beschädigt wird, so daß die Dichtfunktion nicht mehr ausreichend gewährleistet ist. Die Beeinträchtigung der Dichtkante ergibt sich dabei zum Beispiel beim Befüllen und Entnehmen der Ware aus dem Behälter. Eine besonders starke Beeinträchtigung tritt bei solchem Mehrweggeschirr auf, da auch bei normaler Benutzung des Geschirrs nicht vermieden werden kann, daß in die Dichtkante Scharten eingebracht werden. Um mit dem Deckelteil als Dichtung zusammenzuwirken, liegt die Dichtkante nämlich auf der Oberseite des insbesondere als Teller ausgebildeten Behälterteils und ist daher beim Essen gegenüber dem Besteck ungeschützt.

Der Erfindung liegt die Aufgabe zugrunde, ein Mehrweggeschirr der eingangs genannten Art so auszubilden, daß eine Beschädigung der Dichtkanten weitgehend vermieden und daher die Dichtfunktion möglichst lange aufrecht erhalten wird.

Diese Aufgabe wird erfindungsgemäß durch das Mehrweggeschirr gemäß Anspruch 1 gelöst. Die am Behälterteil vorgesehene erste Dichtkante ist von mindestens einer Schutzwand umgeben, die einen Eingriff auf die Dichtkante bei normalem Gebrauch des Mehrweggeschirrs ausschließt.

Durch die Schutzwand wird verhindert, daß beim Befüllen oder Entladen des Mehrweggeschirrs Beschädigungen der Dichtkante auftreten. Bei dem erfindungsgemäßen Mehrweggeschirr ist die Dichtkante also nicht mehr freiliegend, sondern durch die Schutzwand verdeckt. Die Ausbildung der Schutzwand kann dabei in vielfältiger Weise erfolgen. Wichtig ist nur, daß die am Behälterteil vorhandene erste Dichtkante soweit geschützt wird, daß bei normalem Gebrauch des Behälters eine Beschädigung nicht auftreten kann. Die zweite Dichtkante am Deckelteil muß dagegen üblicherweise nicht geschützt werden, da der Deckelteil beim Be- und Entladen des Behälterteils, also beim normalen Gebrauch des Mehrweggeschirrs entfernt ist und daher nicht beschädigt werden kann.

Die erste Dichtkante ist in einer Vertiefung angeordnet, die in einem die Befüll- und Entnahmeöffnung des Behälterteils umgebenden Randteil vorgesehen ist, während die am Deckelteil vorgesehene zweite Dichtkante an einem der Randkontur entsprechend ausgebildeten Steg angeordnet ist, welcher zum Eingriff in die Vertiefung ausgebildet ist. Durch die Anordnung in einer Vertiefung wird verhindert, daß die Dichtkante beschädigt wird, insbesondere wird ein Eingriff mit einem Entnahmegerät ausgeschlossen. Bei einem Mehrweggeschirr wird verhindert, daß mit Messer oder Gabel auf die Dichtkante eingewirkt wird. Die Öffnung der Vertiefung wird daher so klein wie möglich ausgebildet. Es genügt, daß der zugeordnete Steg in die Vertiefung eingreifen kann, wobei der Steg seinerseits eine relativ geringe Größe aufweisen kann.

Nach einer weiteren Ausgestaltung der Erfindung ist zwischen Aufnahmeteil und Deckelteil eine Schnappverbindung vorgesehen. Dies hat den Vorteil, daß das Verschließen und das Öffnen des Behälterteils erleichtert ist.

Die Schnappverbindung kann bevorzugt in Art einer Kugelschnappverbindung ausgebildet sein, mit einem einen im Querschnitt etwa kreisförmig ausgebildeten Endabschnitt aufweisenden Stegteil und einem hierzu reziprok ausgebildeten Aufnahmeteil. Hierdurch wird in geschickter Weise einerseits eine geschützte Anordnung der ersten Dichtkante realisiert, indem diese insbesondere am Grund des Aufnahmeteils angeordnet ist, und andererseits eine einfach bedienbare Schnappverbindung. Die zweite Dichtkante ist dabei entsprechend an dem Endabschnitt des Stegteils vorgesehen.

Das erfindungsgemäße Mehrweggeschirr ist bevorzugt aus Leichtbaumaterial, insbesondere Kunststoff gebildet. Dies verringert vorteilhafterweise das Transportgewicht. Durch Kunststoff kann zugleich die für die Schnappverbindung erforderliche Flexibilität des Behälterrandes erzielt werden.

Der Behälterteil kann als Teller ausgebildet sein, in welchem die Speisen aufbewahrt werden. Falls gewünscht, kann eine Unterteilung des Tellerteils durch Stege vorgesehen sein.

Bei Verwendung als Mehrweggeschirr wird durch die erfindungsgemäße Ausgestaltung verhindert, daß beim Essen mit dem Besteck Beschädigungen in die Dichtkante am Teller eingebracht werden. Die Dichtfunktion bleibt dadurch erhalten, so daß das Geschirr als Mehrweggeschirr geeignet ist und häufig wiederbefüllt werden kann. Insbesondere bei Behältern für Lebensmittel ist nämlich die zuverlässige Aufrechterhaltung der Dichtfunktion wichtig.

Insbesondere bei einem Mehrweggeschirr ist die Verbindung zwischen Behälterteil und Deckel bevorzugt so ausgebildet, daß ein sich im Innern des geschlossenen Behälters aufbauender Überdruck über die Verbindung entweichen kann. Es ist aber auch möglich, hierfür spezielle Entlüftungsventile vorzusehen. Diese Maßnahmen sind wichtig, wenn das Mehrweggeschirr zugleich zum Erhitzen der enthalteten Speisen, beispielsweise in einer Mikrowelle, verwendet wird, um das sich beim Erhitzen ausdehnende Gas im Inneren des Behälters entweichen zu lassen. Diese Funktion kann selbstverständlich auch bei einer anderen Verwendung des erfindungsgemäßen Mehrweggeschirrs vorgesehen sein.

Des weiteren können Behälterteil und Deckel zum leichteren Öffnen so ausgebildet sein, daß diese in mindestens einem Abschnitt jeweils einander zugeordnete Ausnehmungen oder Fortsätze aufweisen, die so zueinander versetzt angeordnet sind, daß der Behälterteil und der Deckel an dieser Stelle jeweils beidseitig erfaßt werden können, um diese auseinanderzudrücken. Der Deckel kann beispielsweise zwei von einander beabstandete, radial nach außen weisende Fortsätze und eine dazwischenliegende, radial nach innen vorgesehene Ausnehmung aufweisen, und der Behälterteil kann einen radial nach außen weisenden Fortsatz aufweisen, der der Ausnehmung des Deckels gegenüberliegend angeordnet ist. Wenn zwei derartige Anordnungen auf zwei voneinander abgewandten Seiten des Mehrweggeschirrs vorgesehen sind, kann der Deckel besonders leicht geöffnet werden.

Eine Ausgestaltung der Erfindung ist zeichnerisch dargestellt und wird nachfolgend beschrieben. Es zeigen, jeweils in schematischer Darstellung,
- Figur 1: einen Querschnitt durch einen erfindungsgemäßen Mehrwegbehälter,
- Figur 2: ein Detail von Fig. 1, und
- Figur 3: eine Draufsicht auf ein Detail einer Variante des erfindungsgemäßen Mehrwegbehälters.

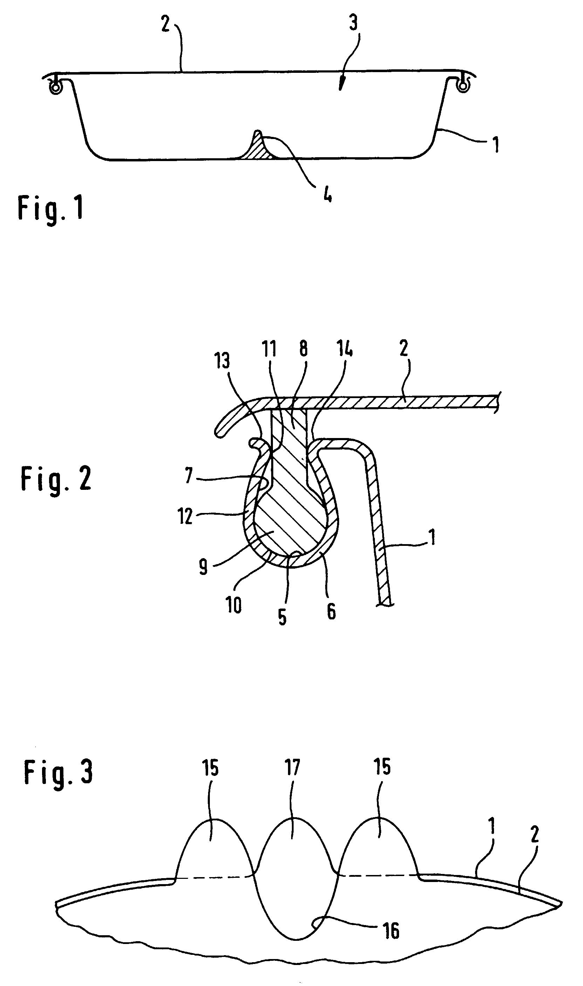

In Fig. 1 erkennt man einen als Mehrweggeschirr ausgebildeten Mehrwegbehälter mit einem als Teller ausgebildeten Aufnahmeteil 1 und einem Deckelteil 2, durch welches die Öffnung 3 des Tellers 1 dichtend verschließbar ist. Wie dargestellt, ist in der Mitte des Tellers 1 zudem ein Steg 4 vorhanden, durch welchen eine Einteilung des Tellers 1 in zwei oder mehr Bereiche bewirkt wird.

Die Art der Verbindung und des dichtenden Verschlusses zwischen Teller 1 und Deckelteil 2 ist insbesondere in Fig. 2 erkennbar. Der Teller weist hierfür eine erste Dichtkante 5 auf, die in einer in einem umlaufenden Randteil 6 ausgebildeten Vertiefung 7 vorgesehen ist. Am Deckelteil 2 ist ein in seiner Kontur dem umlaufenden Randteil entsprechend ausgebildeter Steg 8 vorhanden, der an seinem freien, dem Teller 1 zugewandten Ende mit einer umlaufenden Verdickung 9 versehen ist, an deren Stirnseite die zweite Dichtkante 10 ausgebildet ist. Bei aufgesetztem Deckelteil 2 wirkt die zweite Dichtkante 10 mit der ersten Dichtkante 5 dichtend zusammen, so daß der von Teller 1 und Deckelteil 2 gebildete Aufnahmeraum dicht verschlossen ist.

Die Vertiefung 7 in dem Randteil 6 ist so ausgebildet, daß ein unbeabsichtigter Eingriff auf die Dichtkante 5 am Grund der Vertiefung 7 ausgeschlossen ist. Die obere Öffnung 11 der Vertiefung 7 ist entsprechend schmal ausgebildet. Die Dicke des Steges 8 entspricht dabei bevorzugt etwa dem freien Durchtrittsquerschnitt dieser Öffnung 11. Um nun ein Einrasten des Steges 8 mit seinem verdickten Ende 9 in die Vertiefung 7 zu ermöglichen, ist zumindest die äußere Wand 12 des Randteils 6 elastisch ausgebildet.

Durch entsprechende Rundungen der die Öffnung 11 umgebenden Kanten 13 und 14 des Randteils 6 sowie aufgrund der im Querschnitt etwa kreisförmigen Ausgestaltung des verdickten Endes 9 ist ein Einschnappen des Steges 8 in die Vertiefung 7 erleichtert. Ebenso ist das Herausziehen des Steges 8 aus der Vertiefung 7 durch diese Ausgestaltung leicht möglich.

Das dargestellte Mehrweggeschirr besteht bevorzugt aus Kunststoff oder einem anderen Leichtbaumaterial. In entsprechender Weise können auch andere Mehrwegbehälter ausgebildet sein.

Durch die in einer Vertiefung 7 angeordnete erste Dichtkante 5 am Tellerteil 1 ist diese Kante vor Beschädigungen beim normalen Gebrauch des Tellers geschützt. Die Dichtfunktion bleibt daher für lange Zeit erhalten, so daß das Mehrweggeschirr häufig umlaufen kann, ohne daß die hygienischen Anforderungen mißachtet würden.

Figur 3 zeigt ein Detail einer Variante des erfindungsgemäßen Mehrwegbehälters, durch welches ein leichtes Öffnen des Behälters ermöglicht wird. Wie dargestellt, ist der Deckel 2 in seinem Randbereich mit zwei radial nach außen weisenden Fortsätzen 15 versehen, zwischen denen eine radial nach innen weisende Ausnehmung 16 vorhanden ist. Der darunterliegende Behälterteil 1 ist mit einem radial nach außen weisenden Fortsatz 17 ausgestattet, der so angeordnet ist, daß er sich der Ausnehmung 16 des Deckels 2 gegenüberliegend befindet. Eine entsprechende Anordnung kann an der hiervon abgewandten Seite des erfindungsgemäßen Mehrwegbehälters vorgesehen sein. Selbstverständlich können aber auch noch weitere solcher Anordnungen vorgesehen sein.

Das Öffnen des erfindungsgemäßen Mehrwegbehälters kann bei dieser Ausgestaltung dadurch erfolgen, daß die Fortsätze 15 und 17 durch Eingriffnahme mit einer Hand auseinandergedrückt werden. Durch die verhältnismäßig großen Flächen der Fortsätze 15 und 17 ist dies im Vergleich zu einer herkömmlichen Ausgestaltung deutlich leichter. Ein erfindungsgemäßer Mehrwegbehälter kann daher selbst bei einem im Behälter herrschenden Unterdruck leicht geöffnet werden. Die Ausgestaltung zur Erleichterung des Öffnens ist nicht auf die dargestellte Variante beschränkt. Vielmehr umfaßt die Erfindung alle Ausgestaltungen, bei welchen der Deckel 2 und das Behälterteil 1 mit zueinander versetzt oder benachbart angeordneten, verhältnismäßig großen Flächen ausgerüstet sind.

## Patentansprüche

1. Mehrweggeschirr für Lebensmittel, mit einem eine Befüll- und Entnahmeöffnung (3) aufweisenden Behälterteil (1) und einem Deckelteil (2), durch welches die Befüll- und Entnahmeöffnung (3) des Behälterteils (1) dichtend verschließbar ist, mit einer am Behälterteil (1) vorgesehenen ersten Dichtkante (5) und einer am Deckelteil (2) vorgesehenen zweiten Dichtkante (10), die als Abdichtung für die Befüll- und Entnahmeöffnung (3) zusammenwirken,
dadurch gekennzeichnet,
daß die am Behälterteil (1) vorgesehene erste Dichtkante (5) im Inneren einer Vertiefung (7) angeordnet ist, die in einem die Befüll- und Entnahmeöffnung (3) des Behälterteils (1) umgebenden Randteil (6) vorgesehen ist, so daß die Begrenzungen (6, 12) der Vertiefung (7) eine Schutzwand bilden, welche die Dichtkante (5) umgibt und einen Eingriff auf die Dichtkante (5) bei normalem Gebrauch des Mehrweggeschirrs ausschließt, und daß die am Deckelteil (2) vorgesehene zweite Dichtkante (10) an einem der Randkontur entsprechend ausgebildeten Steg (8) angeordnet ist, welcher zum Eingriff in die Vertiefung (7) ausgebildet ist.

2. Mehrweggeschirr nach Anspruch 1,
dadurch gekennzeichnet,
daß zwischen Behälterteil (1) und Deckelteil (2) eine Schnappverbindung vorgesehen ist, wobei die Verbindung insbesondere in Art einer Kugelschnappverbindung ausgebildet ist, mit einem einen im Querschnitt etwa kreisförmig ausgebildeten Endabschnitt (9) aufweisenden Stegteil (8) und einem hierzu reziprok ausgebildeten Aufnahmeteil (6), und wobei die erste Dichtkante (5) im Inneren des Aufnahmeteils (6) und die zweite Dichtkante (10) an dem Endabschnitt (9) des Stegteils (8) ausgebildet ist.

3. Mehrweggeschirr nach Anspruch 1 oder 2,
dadurch gekennzeichnet,
daß das Mehrweggeschirr aus Leichtbaumaterial, insbesondere Kunststoff, besteht.

4. Mehrweggeschirr nach einem der vorhergehenden Ansprüche,
dadurch gekennzeichnet,
daß der Behälterteil als Teller ausgebildet ist.

5. Mehrweggeschirr nach einem der vorhergehenden Ansprüche,
dadurch gekennzeichnet,
daß die Dichtkanten (5) und (10) so ausgebildet sind, daß bei einem sich im geschlossenen Behälter ausbildenden Überdruck Gas zwischen den Dichtkanten nach außen entweichen kann.

6. Mehrweggeschirr nach einem der vorhergehenden Ansprüche,
dadurch gekennzeichnet,
daß mindestens ein separates Entlüftungsventil vorgesehen ist.

7. Mehrweggeschirr nach einem der vorhergehenden Ansprüche,
dadurch gekennzeichnet,
daß der Behälterteil (1) und der Deckelteil (2) in ihrem jeweiligen Randbereich einander benachbarte, jedoch zueinander versetzte, verhältnismäßig große Eingriffsflächen aufweisen.

8. Mehrweggeschirr nach Anspruch 7,
dadurch gekennzeichnet,
daß die Flächen an radial nach außen weisenden Fortsätzen (15) bzw. (17) des Behälterteils (1) und des Deckelteils (2) vorgesehen sind.

## Claims

1. Reusable dish for food comprising a container part (1) having a filling and removal opening (3) and a cover part (2) through which the filling and removal opening (3) of the container part (1) can be sealingly closed, a first sealing edge (5) provided on the container part (1) and a second sealing edge (10) provided on the cover part (2) which cooperate as a seal for the filling and removal opening (3),
characterized in that
the first sealing edge (5) provided at the container part (1) is arranged in the interior of a recess (7) which is provided in a rim part (6) surrounding the filling and removal opening (3) of the container part (1) so that the boundaries (6, 12) of the recess (7) form a protective wall which surrounds the sealing edge (5) and precludes interference with the sealing edge (5) in normal use of the reusable dish, and in that the second sealing edge (10) provided at the cover part (2) is arranged on a web (8) formed in accordance with the rim contour which is designed for engagement into the recess (7).

2. Reusable dish in accordance with claim 1,
characterized in that
a snap connection is provided between the container part (1) and the cover part (2), with the connection being designed in the manner of a ball snap connection with a web part (8) having an end section (9) which is approximately circular in cross-section and a receiving part (6) of reciprocal shape, and wherein the first sealing edge (5) is formed in the interior of the receiving part (6) and the second sealing edge (10) is formed at the end section (9) of the web part (8).

3. Reusable dish in accordance with claim 1 or claim 2,
characterized in that
the reusable dish consists of a light-weight material, in particular plastic.

4. Reusable dish in accordance with one of the preceding claims,
characterized in that
the container part is formed as a plate.

5. Reusable dish in accordance with one of the preceding claims,
characterized in that
the sealing edges (5 and 10) are so formed that when over-pressure forms in the closed container gas can escape outwardly between the sealing edges.

6. Reusable dish in accordance with one of the preceding claims,
characterized in that
at least one separate venting valve is provided.

7. Reusable dish in accordance with one of the preceding claims,
characterized in that
the container part (1) and the cover part (2) have adjacent but mutually displaced relatively large engagement surfaces in their respective rim regions.

8. Reusable dish in accordance with claim 7,
characterized in that
the surfaces are provided at radially outwardly pointing projections (15 and 17) of the container part (1) and of the cover part (2) respectively.

## Revendications

1. Vaisselle réutilisable pour produits alimentaires, comportant une partie de récipient (1) avec une ouverture de remplissage et de prélèvement (3), et une partie de couvercle (2) au moyen de laquelle l'ouverture de remplissage et de prélèvement (3) de la partie de récipient (1) peut être refermée de façon étanche, comportant une première arête d'étanchement (5) prévue sur la partie de récipient (1) et une seconde arête d'étanchement (10) prévue sur la partie de couvercle (2), qui coopèrent comme étanchement pour l'ouverture de remplissage et de prélèvement (3), caractérisée en ce que la première arête d'étanchement (5) prévue sur la partie de récipient (1) est agencée dans l'intérieur d'un renfoncement (7) prévu dans une partie marginale (6) entourant l'ouverture de remplissage et de prélèvement (3) de la partie de récipient (1), de sorte que les délimitations (6, 12) du renfoncement (7) forment une paroi de protection qui entoure arête d'étanchement (5) et qui exclut un engagement sur l'arête d'étanchement (5) lors d'une utilisation normale de la vaisselle réutilisable, et en ce que la seconde arête d'étanchement (10) prévue sur la partie de couvercle (2) est agencée sur une barrette (8) réalisée en correspondance du contour marginal pour venir s'engager dans le renfoncement (7).

2. Vaisselle réutilisable selon la revendication 1, caractérisée en ce qu'une liaison à encliquetage est prévue entre la partie de récipient (1) et la partie de couvercle (2), ladite liaison étant réalisée en particulier sous forme d'une liaison à encliquetage à bille, comportant une partie de barrette (8) présentant un tronçon d'extrémité (9) à section approximativement circulaire et une partie de réception (6) réalisée réciproquement à celle-ci, la première arête d'étanchement (5) étant réalisée dans l'intérieur de la partie de réception (6), et la seconde arête d'étanchement (10) étant réalisée sur le tronçon d'extrémité (9) de la partie de barrette (8).

3. Vaisselle réutilisable selon l'une ou l'autre des revendications 1 et 2, caractérisée en ce que la vaisselle réutilisable est constituée en un matériau léger, en particulier en matière plastique.

4. Vaisselle réutilisable selon l'une quelconque des revendications précédentes, caractérisée en ce que la partie de récipient est réalisée sous forme d'une assiette.

5. Vaisselle réutilisable selon l'une quelconque des revendications précédentes, caractérisée en ce que les arêtes d'étanchement (5) et (10) sont réalisées de telle sorte que lorsqu'une surpression s'établit dans le récipient fermé, du gaz peut s'échapper vers l'extérieur entre les arêtes d'étanchement.

6. Vaisselle réutilisable selon l'une quelconque des revendications précédentes, caractérisée en ce qu'il est prévu au moins une soupape de mise à l'air séparée.

7. Vaisselle réutilisable selon l'une quelconque des revendications précédentes, caractérisée en ce que la partie de récipient (1) et la partie de couvercle (2) comportent dans leur zone de bordure respective des surfaces d'engagement relativement grandes voisines les unes des autres mais agencées en décalage les unes par rapport aux autres.

8. Vaisselle réutilisable selon la revendication 7, caractérisée en ce que les surfaces sont prévues sur des prolongements (15) ou (17), dirigés radialement vers l'extérieur, de la partie de récipient (1) et de la partie de couvercle (2).
